# EUROPEAN PATENT APPLICATION

(11) **EP 3 657 141 A1**
(43) Date of publication of application: **27.05.2020**
(21) Application number: 18207953.3
(22) Date of filing: 23.11.2018
(51) Int. Cl.: G01J 1/04, G01J 1/02, G01J 1/58, G01J 1/42

(54) **DETECTOR AND METHOD FOR MEASURING ULTRAVIOLET RADIATION**

(71) Applicant: trinamiX GmbH, 67063 Ludwigshafen am Rhein (DE)
(72) Inventor: HAMED, Hamid Muhammed, 67063 Ludwigshafen am Rhein (DE); BONSIGNORE, Christian, 67063 Ludwigshafen am Rhein (DE); LUNGENSCHMIED, Christoph, 67063 Ludwigshafen am Rhein (DE); REIN, Benjamin, 67063 Ludwigshafen am Rhein (DE); LENNARTZ, Christian, 67063 Ludwigshafen am Rhein (DE); SEND, Robert, 67063 Ludwigshafen am Rhein (DE)
(74) Representative: Altmann Stößel Dick Patentanwälte PartG mbB

(57) **Abstract**

An optical detector and a method for measuring ultraviolet (UV) radiation is disclosed. The detector comprises:
- at least two fluorescent waveguiding sheets (114), each one of the fluorescent waveguiding sheets (114) having at least one fluorescent material (116), wherein the fluorescent material (116) is adapted for generating fluorescence light (124) comprising visible radiation (126) in response to an illumination of the fluorescent material (116) by an incident light beam (118) providing ultraviolet radiation (120);
- at least two optical sensors (128), each one of the optical sensors (128) being sensitive to visible radiation (126) and adapted for detecting the fluorescence light (124), wherein each one of the optical sensors (128) is adapted for generating at least one sensor signal in response to the fluorescence light (124); and
- at least one evaluation device (140), wherein the evaluation device (140) is configured for determining at least one property of the ultraviolet radiation (120) as provided by the incident light beam (118) by evaluating the sensor signal,
wherein the at least two fluorescent waveguiding sheets (114) are arranged in a manner that the incident light beam (118) is capable of subsequently impinging on each one of the fluorescent waveguiding sheets (114), each one of the fluorescent waveguiding sheets (114) being semitransparent with respect to the incident light beam (118).

## Description

### Field of the invention

The present invention relates to a detector and a method for measuring ultraviolet (UV) radiation. The detector and the related method according to the present invention may, specifically, be employed for determining and/or quantifying UV radiation that can be generated by natural and/or artificial sources. Applications may include areas where risks involving UV radiation exposure may reasonably be expected, in particular, in the areas of personal healthcare, public health, or occupational safety. However, further applications may also be feasible.

### Prior art

A large number of optical detectors and photovoltaic devices are known from the prior art. While photovoltaic devices are generally used to convert electromagnetic radiation, for example UV radiation, into electrical signals or electrical energy, optical detectors are generally used for picking up image information and/or for detecting at least one optical parameter, such as an intensity, which may be related to the incident UV radiation. In the field of photovoltaics, devices are known which are adapted for converting UV radiation into visible radiation at which spectral range photovoltaic cells are known to exhibit an increased efficiency for generating electric energy.

US 4,149,902 A discloses a device for concentrating radiant energy such as solar radiation, collected over a large area, to a smaller area for more efficient conversion of the radiant energy to a more useful form of energy. Fluorescent material in a thin film form is optically bonded by an adhesive or viscous, transparent medium to a massive slab of transparent material such as glass or plastic. Energy conversion devices, such as photovoltaic cells, are disposed around the edges of the slab.

US 2013/0074928 A1 discloses a wavelength conversion type photovoltaic cell sealing sheet which includes a dispersion medium resin, and a fluorescent material having an absorption wavelength peak at from 300 to 450 nm, wherein a content of an ultraviolet absorber other than the fluorescent substance is 0.15 parts by mass or less with respect to 100 parts by mass of the dispersion medium resin. Furthermore, a photovoltaic cell module of the present invention has a photovoltaic cell and the wavelength conversion type photovoltaic cell sealing sheet.

KR 101733575 B1 discloses a wavelength converting film for a solar cell. More specifically, the wavelength converting film can change light in a UV ray region into light in a visible light region by using a fluorescent body and can simultaneously improve generation efficiency by increasing the amount of visible light applied to a solar cell by using metal nanoparticles. The wavelength converting film for a solar cell of the present invention comprises: a base material; an adhesive layer formed at the bottom of the base material; a release paper sheet attached to the adhesive layer; a metal layer formed at the top of the base material, and including nanoparticles of at least any one metal selected from gold, silver, platinum, and aluminum; and a wavelength converting layer formed at the top of the metal layer, and including a fluorescent body for converting light in a UV ray wavelength region of solar light into light in a visible light wavelength region.

WO 2018/037914 A1 discloses a fluorescent substance which allows a resin to maintain visible light transmission properties when mixed with the resin, and has high conversion efficiency from ultraviolet light into visible light, and particularly superior UV resistance, and a resin composition containing the fluorescent substance. Further provided is a resin molded article and a wavelength conversion material for solar cells, using such a resin composition. The fluorescent substance includes silica as a matrix, and contains aluminum and europium, wherein the main crystal phase of the silica is a cristobalite phase.

Despite the advantages achieved by the above-mentioned devices in the field of photovoltaics, several technical challenges for UV sensors, detectors and related methods remain. Thus, a general need exists for improved low-cost UV sensors and detectors.

Existing lower-cost UV detectors fail to achieve a high performance or accuracy and appear to be able to measure only an overall intensity over both the UV and visible spectral range of a light source, not specifically the UV component provided by a light source. Although a sensitivity of known UV detectors might be high, their specificity may still be low. Currently, photodiodes are used in combination with at least one bandpass filter which is placed between the incident light and the sensor in order to obtain a higher selectivity. However, the photodiodes are expensive while their dynamic range is rather limited, specifically for incident UV radiation. Examples include a GaP based photodiode FGAP71 or a Si based photodiode FDS010, both available at Thorlabs, Inc. For details concerning their technical properties, reference can be made to www.thorlabs.de/thorcat/12100/12174-S01.PDF for FGAP71 and to www.thorlabs.de/ drawings/f050cff054932123-18D70AD8-AE9C-EA7E-3E6BAF651F4574DB/FDS010-SpecSheet.pdf for FDS010 (both documents retrieved November 21, 2018). Whereas the photodiode FGAP71 is adapted for a wavelength range of 150-550 nm with maximum responsivity at approx. 440 nm, the photodiode FDS010 is adapted for the wavelength range of 200-1100 nm with maximum responsivity at approx. 730 nm.

### Problem addressed by the invention

It is therefore an object of the present invention to provide a low-cost UV detector and a related method for measuring UV radiation. Specifically, it is an object of the present invention that the low-cost UV detector and the related method for measuring UV radiation uses low-cost hardware components, increases the dynamic range, and may specifically be adapted for determining an UV component as provided by a light source.

### Summary of the invention

This problem is solved by the invention with the features of the independent patent claims. Advantageous developments of the invention, which can be realized individually or in combination, are presented in the dependent claims and/or in the following specification and detailed embodiments.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or" one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such a way with other optional or non-optional features of the invention.

In a first aspect, the present invention refers to a detector for measuring ultraviolet radiation. Herein, the detector comprises:
- at least two fluorescent waveguiding sheets, each one of the fluorescent waveguiding sheets having at least one fluorescent material, wherein the fluorescent material is adapted for generating fluorescence light comprising visible radiation in response to an illumination of the fluorescent material by an incident light beam providing ultraviolet radiation;
- at least two optical sensors, each one of the optical sensors being sensitive to visible radiation and adapted for detecting the fluorescence light, wherein each one of the optical sensors is adapted for generating at least one sensor signal in response to the fluorescence light; and
- at least one evaluation device, wherein the evaluation device is configured for determining at least one property of the ultraviolet radiation as provided by the incident light beam by evaluating the sensor signal,
wherein the at least two fluorescent waveguiding sheets are arranged in a manner that the incident light beam is capable of subsequently impinging on each one of the fluorescent waveguiding sheets, each one of the fluorescent waveguiding sheets being semitransparent with respect to the incident light beam.

Accordingly, a detector for measuring ultraviolet radiation is proposed. As generally used, the "detector" refers to an arbitrary device which is adapted for generating information on at least one measurable property related to a physical, chemical or biological phenomenon, which may also be denominated by the term "measuring". For being capable of generating the desired item of information, the detector usually comprises at least one sensor and at least one evaluation device which are arranged in a manner to be able order to fulfil this purpose. Herein, the sensor is adapted for recording at least one value related to the measurable property and generating at least one sensor signal whereas the evaluation device is configured for determining the measurable property from the at least one sensor signal. The detector as used herein, in addition, comprises further elements which are designed in order to complement or to modify the mentioned arrangement of the at least one sensor and the evaluation device. The detector as used herein may be a stationary device or, preferably, a mobile device. Herein, the detector may be a stand-alone device or may form part of another device, such as a computer, a vehicle or any other device. Further, the detector may, preferably, be a hand-held device. However, other embodiments of the detector may be feasible.

As already indicated above, the detector according to the present invention is adapted for measuring ultraviolet radiation and may, therefore, also be denoted as "ultraviolet detector", or abridged as "UV detector". As used herein, both terms "radiation" or "light" refer to electromagnetic radiation in the ultraviolet spectral range or in the visible spectral range. Further kinds of the electromagnetic radiation, such as infrared light, shall not be taken into consideration herein. As generally used, "ultraviolet radiation" or "UV radiation" refers to a partition of the electromagnetic spectrum from 1 nm to 400 nm, in particular from 100 nm to 400 nm, which can be subdivided into a various ranges. As recommended by ISO standard ISO-21348, the ultraviolet radiation may be divided in an ultraviolet A range, abbreviated to "UVA", from 400 nm to 315 nm, in an ultraviolet B range, abbreviated to "UVB", from 315 nm to 280 nm, and in an ultraviolet C range, abbreviated to "UVC", from 280 nm to 100 nm. However, other kinds of dividing the ultraviolet spectral range are known, such as into near ultraviolet (NUV) from 300 nm to 400 nm, middle ultraviolet (MUV) of 200 nm to 400 nm, and vacuum ultraviolet (VUV) of 10 nm to 200 nm.

Further, the ultraviolet radiation to be measured according to the present invention may be generated by any kind of ultraviolet source, be it a natural UV source or an artificial UV source. Herein, natural UV sources include the sun, lightning, and other kinds of atmospheric gas discharge. Artificial UV sources can be selected from gas discharge lamps; halogen lamps; lasers, such as excimer lasers or diode lasers, light-emitting diodes, cathode tubes, or corona discharge. Most kinds of artificial UV sources may, specifically, be used at industrial sites, in medical centers, or in various kinds of laboratories. Other kinds of UV sources may also be possible. As a result, UV radiation, either UV radiation solely, or UV radiation among further kinds of radiation, specifically in addition to visible radiation, may, thus, directly be provided by the UV source or may, alternatively or in addition, be provided as reflected or scattered UV light, which may at least partially directed towards the detector in form of a light beam. As generally used, the term "light beam" refers to an amount of light and traveling essentially in the same direction, wherein the light beam may propagate as a parallel light beam or may exhibit a spreading angle or a widening angle. The light beam can, specifically, be a Gaussian light beam; however, other embodiments may also be feasible.

According to the present invention, the ultraviolet detector comprises are at least two fluorescent waveguiding sheets which are arranged impinged by an incident light beam directed to the fluorescent waveguiding sheets. As generally used, the "fluorescent waveguiding sheet" refers to an arbitrary element which exhibits both waveguiding properties and fluorescent properties. Herein, the term "waveguiding", in general, refers to a property of an element or a plurality of elements to guide the incident light beam along a beam path by internal reflection, specifically by internal total reflection. Further, the term "fluorescence", generally, refers to a property of an element or of a kind of material which is adapted to emit secondary light, which is also be referred to as "fluorescence light" within a so-called "fluorescence process" in response to an excitation of the element or the material by electromagnetic radiation, also referred to as "primary radiation" or "excitation radiation", such as primary light or excitation light. Typically, the fluorescence light exhibits a longer wavelength and, thus, a lower energy than the primary radiation.

Various types of fluorescent waveguiding sheets are known from prior art. By way of example, fluorescent waveguiding sheets are disclosed in US 2013/0074928 A1, KR 101733575 B1, or WO 2018/037914 A1 as cited above. In general, each one of the fluorescent waveguiding sheets comprises a so-called "fluorescent material" which refers to an arbitrary material having fluorescence properties. With particular regard to the present invention, the fluorescent material is adapted for generating fluorescence light which comprises visible radiation, wherein the fluorescence light is generated in response to an illumination of the fluorescent material by an incident light beam that provides ultraviolet radiation, as indicated above, either UV radiation solely, or UV radiation among further kinds of radiation, specifically in addition to visible radiation. In general, the fluorescent material and, as a result, also the fluorescent waveguiding sheet, has nonlinear properties, i.e. exhibit fluorescence properties in which the fluorescence is a nonlinear function of a power of an intensity of the illumination by the light beam, i.e. of the excitation light. Nonlinear fluorescence properties are widely known in the field of fluorescent materials. Nonlinear properties in fluorescence, generally, occur due to various physical processes. Without wishing to be bound by theory, nonlinear fluorescence may occur due to saturation effects which specifically may be due to exciton-exciton-quenching or exciton-exciton-recombination. Other quenching processes are generally known and described in the literature of fluorescence. Most commonly, towards higher intensities of the light beam or excitation light, the total power of the fluorescence sub-proportionally follows the intensity of the light beam. Most often, saturation effects are observed. In the context of the present invention, these nonlinear fluorescence properties may be used for determining at least one property of the ultraviolet radiation.

The fluorescent waveguiding sheet may comprise at least one matrix material. As used herein, the term "matrix material", generally, refers to a material which forms a predominant part of the fluorescent waveguiding sheet and which defines the main body of the fluorescent waveguiding sheet. As an example, the matrix material may be a material which is capable of receiving one or more additional materials that therein, such as by intermixing, chemical bonding, dispersion or solving. Thus, the at least one fluorescent material may be one or more of mixed into the matrix material, dispersed into the matrix material, chemically bound to the matrix material or dissolved in the matrix material.

The matrix material may, specifically, be or comprise at least one plastic material. The plastic material specifically may be or may comprise at least one polymer material. The plastic material, as an example, may be or may comprise at least one material selected from the group consisting of a polycarbonate, a poly(methyl methacrylate), a polystyrene, a polyurethane, a polypropylene, a polyethylene terephthalate, a polyvinylchloride. Other materials, however, are feasible.

The fluorescent material may, generally, comprise an arbitrary fluorophore. Specifically, the at least one fluorescent material may comprise at least one fluorescent dye. A wide variety of fluorescent dyes is generally known to the skilled person. As outlined above, most of these fluorescent dyes exhibit the above-mentioned saturation effects, thereby rendering the fluorescence being a nonlinear function of the excitation. As an example, the fluorescent dye may be capable of being saturated by the light beam, such that a total power of the fluorescence light generated by the fluorescent dye may be a nonlinear function of an intensity of the incident light beam. The fluorescent dye specifically may comprise at least one organic fluorescent dye. Inorganic dyes, however, may be used additionally or alternatively. The fluorescent dye specifically may be selected from the group consisting of: a xanthene derivative, preferably one or more of fluorescein, rhodamine, oregon green, eosin, texas red, or a derivative of any component thereof; a cyanine derivative, preferably one or more of cyanine, indocarbocyanine, oxacarbocyanine, thiacarbocyanine, merocyanine, or a derivative of any component thereof; a squaraine derivative or a ring-substituted squaraine, preferably one or more of Seta, SeTau, and Square dyes, or a derivative of any component thereof; a naphthalene derivative, preferably one or more of a dansyl or a prodan derivative thereof; a coumarin derivative; a oxadiazole derivative, preferably one or more of pyridyloxazole, nitrobenzoxadiazole, benzoxadiazole, or a derivative of any component thereof; an anthracene derivative, preferably one or more of an anthraquinone, DRAQ5, DRAQ7, CyTRAK orange, or a derivative of any component thereof; a pyrene derivative, preferably cascade blue; an oxazine derivative, preferably one or more of nile red, nile blue, cresyl violet, oxazine 170, or a derivative of any component thereof; an acridine derivative, preferably one or more of proflavin, acridine orange, acridine yellow, or a derivative of any component thereof; an arylmethine derivative, preferably one or more of auramine, crystal violet, malachite green, or a derivative of any component thereof; a tetrapyrrole derivative, preferably one or more of porphin, phthalocyanine, bilirubin; a rylene dye or any derivative thereof, such as a perylene dye; a naphthalene imid or perylene imide; a naphthoilene benzimidazole dye such as published in WO 2012/168395 A1; or a derivative of any component of the listed substances. It shall be noted, however, that other dyes may be used additionally or alternatively.

In a particularly preferred embodiment, the fluorescent material may, preferably be selected in a manner that the fluorescence light may only be generated upon illumination by radiation from the ultraviolet spectral range or a partition thereof. As a result, the UV detector according to the present invention may, in particular, be selective to UV radiation solely, wherein the measurement results as provided by the UV detector may not be modified by other types of radiation, specifically visible radiation. Alternatively or in addition, at least one optical filter element may be placed within the beam path, wherein the optical filter element may be capable of filtering out radiation outside the ultraviolet spectral range or a partition thereof. Specifically, the optical filter element may, thus, comprise an optical short-pass filter, an optical long-pass filter or, preferably, an optical band-pass filter. By way of example, the optical band-pass filter may have a wavelength band which can be designed for incident radiation to pass within a wavelength range of 1 nm to 400 nm, such as in the range of 300 nm to 400 nm covering the near ultraviolet, of 300 nm to 400 nm covering the UVA and/or of 280 nm to 315 nm covering the UVB. However, other kinds of optical filter elements may also be feasible.

In accordance with the present invention, the at least two fluorescent waveguiding sheets as comprised by the UV detector are arranged in a manner that the incident light beam is capable of subsequently impinging on each one of the fluorescent waveguiding sheets. For this purpose, the fluorescent waveguiding sheets may be arranged in a stack, wherein they may, preferably, be stacked essentially perpendicular with respect to an optical axis, wherein the term "optical axis" refers to a direction of the incident light beam impinging an initial fluorescent waveguiding sheet as comprised by the stack. As used herein, the term "essentially perpendicular" refers to a condition of a perpendicular orientation exhibiting a tolerance of ± 20° or less, preferably a tolerance of ± 10° or less, more preferred a tolerance of ± 5° or less. Thus, a light beam travelling along the optical axis may impinge in a subsequent manner on each of the fluorescent waveguiding sheets. Thus, the light beam may, consecutively, pass through the fluorescent waveguiding sheets being arranged within the stack. Specifically, the at least two fluorescent waveguiding sheets may be arranged in an essentially parallel manner within the stack. As used herein, the term "essentially parallel" refers to the condition of a parallel orientation, exhibiting a tolerance of ± 20° or less, preferably a tolerance of ± 10° or less, more preferred a tolerance of ± 5° or less.

Other embodiments, however, are possible, specifically embodiments in which more than one stack may be comprised by the UV detector. In these embodiments, at least two of the fluorescent waveguiding sheets may be positioned in different partial beam paths of the detector. Thus, the beam path of the UV detector may be split into two or more partial beam paths, such as by using one or more beam splitting elements, specifically one or more semitransparent mirrors and/or beam splitting cubes.

In order to facilitate stacking in the above-described manner, the fluorescent waveguiding sheets may, specifically, be an element or may comprise an element which has a sheet-like shape or which is a sheet. As used herein, the term "sheet", generally, refers to an element which has a lateral extension, such as a diameter or an equivalent diameter, which significantly exceeds a thickness of the element, such as by at least a factor of 5, more preferably by at least a factor of 10 or even more preferably by at least a factor of 20, a factor of 50 or even a factor of 100. Although the fluorescent waveguiding sheet may, specifically, be or comprise at least one planar sheet, however, slight curvatures still may be tolerated. In other embodiments, however, the fluorescent waveguiding sheet may also be embodied as a curved fluorescent waveguiding sheet, such as in order to provoke specific optical effects which might be desirable in certain applications. Thus, the present UV detector may comprise one or more fluorescent waveguiding sheets that may be curved, flexible or having a specific geometry. Preferably, the fluorescent waveguiding sheet may have a thickness of 10 µm to 3 mm, preferably a thickness of 100 µm to 1 mm, in particular, a thickness of 50 µm to 2 mm. The thickness of the fluorescent waveguiding sheet specifically may be a dimensioned along an optical axis of the UV detector. Herein, the thickness may be adapted for improving waveguiding properties of the fluorescence light. Further, the fluorescent waveguiding sheet may, specifically, be a rectangular fluorescent waveguiding sheet, in particular, a square waveguiding sheet. Other embodiments are feasible. Further, the fluorescent waveguiding sheet may, fully or partially, be rigid or, alternatively, fully or partially, be embodied as a flexible or a deformable sheet.

For a purpose of allowing the incident light beam to impinge all of the fluorescent waveguiding sheets within the stack, each one of the fluorescent waveguiding sheets is a semitransparent fluorescent waveguiding sheets comprising semitransparent matrix and/or a semitransparent fluorescent material. As generally used, the term "semitransparent" refers to a property of an arbitrary material being capable of absorbing a portion p of less than 100 % of an incident light beam, resulting in a transmission of a further portion 1-p with respect to the incident light beam. Thus, each one of the fluorescent waveguiding sheets attenuates the incident UV radiation by a portion p which may be provided by an intrinsic property the fluorescent material comprised by the fluorescent waveguiding sheet itself and/or by a concentration of the fluorescent material within the matrix material. By way of example, the fluorescent waveguiding sheet may, specifically, be or comprise a transparent material, specifically a transparent sheet. However, further effects may also result in an attenuation of the incident UV radiation in the fluorescent waveguiding sheet. The further portion *1-p* of the incident UV radiation can pass the particular fluorescent waveguiding sheet for impinging on an adjacent fluorescent waveguiding sheet which is located adjacently within the stack further down along the beam path on which the incident light beam may travel.

In a preferred embodiment, 40 % to 60 %, in particular approximately 50 %, of the incident UV radiation which impinges on an individual fluorescent waveguiding sheet can, thus, be absorbed by each one of the impinged fluorescent waveguiding sheets. For this purpose, a transparency of each of the individual fluorescent waveguiding sheets may be a transparency of 40 % to 60 %, in particular approximately 50 %, over the whole UV spectral range or a partition thereof, such as in one or more of the above-indicated ranges. Other embodiments are feasible. In a preferred embodiment, the portion p of the attenuation of the UV radiation by each one of the fluorescent waveguiding sheets may be equal, thus, resulting in a total attenuation of *(1-p)ⁿ* of the incident UV radiation for n adjacently placed fluorescent waveguiding sheets within the stack.

In an alternative embodiment, any one or each one of fluorescent waveguiding sheets may exhibit an individual value for the portion *p*, such as the percentage, of the attenuation of the UV radiation, such as by comprising an individual fluorescent material. In general, a large number of different fluorescent dyes may be available for being used as the fluorescent material in the fluorescent waveguiding sheets according to the present invention. In this regard, the fluorescent material as used for the fluorescent waveguiding sheet may be selected according to considerations with respect to costs and availability of the material but also with respect to the performance of the material with regard to material properties, such as the attenuation and/or a fluorescence gain with a specific wavelength range.

As further already indicated above, the UV detector according to the present invention comprises at least two optical sensors. As generally used, the term "optical sensor" refers to a light-sensitive device for detecting a light beam, such as for detecting an illumination and/or a light spot generated by a light beam. The optical sensor according to the present invention is sensitive to visible radiation, specifically to the visible radiation which has been generated by the fluorescent waveguiding sheets and guided towards one or more of the optical sensor by the respective fluorescent waveguiding sheet.

In a particularly preferred embodiment of the present invention, the fluorescent waveguiding sheet may be adapted for guiding the fluorescence light towards at least one edge of the fluorescent waveguiding sheet. As further used herein, the term "edge" generally refers to a boundary of the at least one fluorescent waveguiding sheet. The term "guiding towards", in general, refers to the fact that the fluorescence light as generated within the fluorescent waveguiding sheet may travel to the boundary of the respective fluorescent waveguiding sheet or to close proximity thereof. As a result, light emerging from the edge into a direction of one or more of the optical sensors can be collected by the at least one respective optical sensor, without being lost by scattering, beam widening or other losses. This purpose, the at least one of the optical sensor can, preferably, be located adjacently to at least one of the edges. It shall be noted, however, that other embodiments may also be feasible for guiding the fluorescence light towards the optical sensor. In a particular embodiment, the detector may, further, comprise at least one waveguide which may be adapted for guiding the fluorescence light from at least one of the edges of the fluorescent waveguiding sheet towards at least one of the optical sensors and which may, therefore, be located between at least one of the fluorescent waveguiding sheets and at least one of the optical sensors.

As already indicated above, the fluorescent waveguiding sheet can, preferably, be arranged in an orientation which may be oriented essentially perpendicular to the optical axis as being defined by the direction of the incident light beam. Particularly in this preferred embodiment, a sensor region of the optical sensor which may be impinged by the incident fluorescent light as being generated by a particular fluorescent waveguiding sheet may also, preferably, be oriented essentially perpendicular to the above-described orientation of the fluorescent waveguiding sheet which is, in this preferred embodiment, parallel to the optical axis and, thus, the direction of the incident light beam. However, other kinds of relative arrangements between the incident light beam, the fluorescent waveguiding sheets and the sensor regions of the optical sensors may also be conceivable.

In a particularly preferred embodiment of the present invention, the number of the fluorescent waveguiding sheets and the number of the optical sensors may be chosen to be equal. In this embodiment, the fluorescent waveguiding sheet may, thus, be adapted for guiding the fluorescence light towards exactly one of the optical sensors. In order to facilitate this kind of embodiment, each one of the optical sensors may be arranged in a manner that its sensor region may be located adjacently or at least in the vicinity of the edge of the corresponding fluorescent waveguiding sheet to which the fluorescent light has been guided within the respective fluorescent waveguiding sheet. Choosing the same number for the fluorescent waveguiding sheets and the optical sensors may be advantageous for obtaining a simple set-up of the UV detector, thus, resulting in a low-cost device. It shall be noted, however, that different numbers for the fluorescent waveguiding sheets and the optical sensors may also be feasible. By way of example, two fluorescent waveguiding sheets may guide their respective fluorescent light into a single optical sensor, such as for obtaining a sum signal, or a single fluorescent waveguiding sheet may guide its fluorescent light into two individual optical sensors, such as for comparison and/or a more detailed analysis. Other embodiments may be conceivable.

In general, the optical sensors may be placed in an arbitrary order. However, in a preferred embodiment, optical sensors which are adapted to detect the fluorescence light generated by a different fluorescent waveguiding sheet, specifically by an adjacent fluorescent waveguiding sheet, may, preferably, not be placed in an adjacent manner. This arrangement may, in an advantageous manner, ensure that a respective contribution from the fluorescence light as provided by one or more other fluorescent waveguiding sheets can better be separated by the optical sensors which are spaced apart with respect to each other. In a particularly preferred embodiment, the optical sensors which are spaced apart from each other can be placed on opposite sides of the stack comprising the fluorescent waveguiding sheet. Alternatively or in addition, at least one further optical element that may be adapted for blocking out incident visible radiation originating from a different fluorescent waveguiding sheet, specifically from an adjacent fluorescent waveguiding sheet, may be provided for one or more of the optical sensors as comprised by the detector. However, other kinds of arrangements which may be adapted for limiting or preventing a cross-talk between different optical sensors may also be feasible.

According to the present invention, each one of the optical sensors which is adapted for detecting the fluorescence light generates, in response to the detected fluorescence light, at least one sensor signal. As used herein, the "sensor signal", generally, refers to an arbitrary memorable and transferable signal which is generated by at least one the optical sensors in response to the illumination by the incident fluorescence light. By way of example, the sensor signal may be or may comprise at least one electronic signal, which may be or may comprise a digital electronic signal and/or an analogue electronic signal. The sensor signal may be or may comprise at least one voltage signal and/or at least one current signal. Further, either raw sensor signals may be used, or the detector, the optical sensor or any other element may be adapted for processing or preprocessing the sensor signal, thereby generating secondary sensor signals, which may also be used as sensor signals, such as preprocessing by filtering or the like.

For a purpose of receiving the incident fluorescence light, the optical sensor comprises at least one sensor region or sensitive area. As further used herein, the terms "sensor region" or "sensitive area", generally, refers to a two-dimensional or three-dimensional region of an element which is sensitive to external influences and, e.g., produces at least one reaction in response to an external stimulus. In the present case, specifically of the fluorescent waveguiding sheet, the sensitive area may be sensitive to an optical excitation. Herein, the sensitive area of the fluorescent waveguiding sheet may, specifically, be a partition of a surface or the volume of the fluorescent waveguiding sheet, particularly oriented towards the incident light beam. Similarly, the sensor region of the optical sensor may, specifically, be a partition of a surface or the volume of the optical sensor, particularly oriented towards the incident fluorescence light. Herein, the sensitive area and/or the sensor region may, specifically, be homogeneous or may be divided physically into partial areas, such as pixels. Herein, the sensitive areas of the specifically fluorescent waveguiding sheet may, preferably, be large sensitive areas, such that the field of view of the UV detector, specifically the viewing angle, may be widened. By way of example, the sensitive areas may have a surface of at least 1 mm², preferably of at least 10 mm², more preferred of at least 100 mm², in particular of at least 400 mm². In contrast hereto, the sensor regions of the optical sensors may, preferably, be adapted with respect to a size of the corresponding edges of the fluorescent waveguiding sheets from which they receive their fluorescent light in order to achieve a high signal-to-noise ratio.

According to the present invention, the optical sensor is sensitive against illumination at least in the visible spectral range in order to being capable of detecting the incident fluorescence light which comprises at least one spectral component within the visible spectral range. Specifically, the optical sensor may be or may comprise at least one element selected from the group consisting of a photodiode, a photocell, a photoconductor, a phototransistor or any combination thereof. Any other type of photosensitive element may be used. Herein, the optical sensor generally may fully or partially be made of inorganic materials and/or may fully or partially be made of organic materials. Preferably, one or more photodiodes may be used, such as commercially available photodiodes, e.g. inorganic semiconductor photodiodes. By way of example, the optical sensor may comprise one of: a GaP based photodiode, a SiC based photodiode, a GaN based photodiode, a TiO₂-based photodiode, or a Si based photodiode, such as the photodiodes as referred to above in more detail. As a result of a transformation of the incident UV radiation by the fluorescent waveguiding sheets into visible radiation as described above in more detail, the optical sensor can, advantageously, be selected from a considerably higher variety which is available for the visible spectral range compared to the UV spectral range, thus, contributing to the desired low-cost set-up of the UV detector according to the present invention.

The at least one sensor signal is, subsequently, transferred to an evaluation device which is configured for determining the desired measurable property from the at least one sensor signal. As generally used, the term "evaluation device" refers to an arbitrary device being adapted for performing operations, preferably by using at least one data processing device and, more preferably, by using at least one processor and/or at least one application-specific integrated circuit. By way of example, the at least one evaluation device may comprise at least one data processing device having a software code stored thereon comprising a number of computer commands. Specifically, the evaluation device may be configured to determine the at least one property of the UV radiation as provided by the incident light beam by evaluating the sensor signal. The above-mentioned operations may be implemented in software and/or hardware, such as by implementing one or more lookup tables. The evaluation device may be or may comprise one or more integrated circuits, such as one or more application-specific integrated circuits (ASICs) or Field Programmable Gate Arrays (FPGAs), and/or one or more data processing devices, such as one or more computers, preferably one or more microcomputers and/or microcontrollers. Additional components may be comprised, such as one or more preprocessing devices and/or data acquisition devices, such as one or more devices for receiving and/or preprocessing of the sensor signals, such as one or more AD-converters and/or one or more filters and/or more phase-sensitive electronic elements, particularly based on a lock-in measuring technique. Further, the evaluation device may comprise one or more measurement devices, such as one or more measurement devices for measuring electrical currents and/or electrical voltages. Further, the evaluation device may comprise one or more data storage devices. Further, the evaluation device may comprise one or more interfaces, such as one or more wireless interfaces and/or one or more wire-bound interfaces. Additionally or alternatively, however, the evaluation device may also fully or partially be embodied by hardware. Additionally or alternatively, the evaluation device may also fully or partially be implemented by using one or more software components. The degree of integration may also have an impact on the speed of evaluation and the maximum frequency. The at least one evaluation device may be adapted for performing at least one computer program, such as at least one computer program adapted for performing or supporting one or more or even all of the method steps of the method according to the present invention. By way of example, one or more algorithms may be implemented which, by using the sensor signals as input variables, may determine the position of the object.

The evaluation device can be connected to or may comprise at least one further data processing device that may be used for one or more of displaying, visualizing, analyzing, distributing, communicating or further processing of information, such as information obtained by the optical sensors and/or by the evaluation device. The data processing device, as an example, may be connected or incorporate at least one of a display, a projector, a monitor, an LCD, a TFT, a loudspeaker, a multichannel sound system, an LED pattern, or a further visualization device. It may further be connected or incorporate at least one of a communication device or communication interface, a connector or a port, capable of sending encrypted or unencrypted information using one or more of email, text messages, telephone, Bluetooth, Wi-Fi, infrared or internet interfaces, ports or connections. It may further be connected or incorporate at least one of a processor, a graphics processor, a CPU, an Open Multimedia Applications Platform (OMAP™), an integrated circuit, a system on a chip such as products from the Apple A series or the Samsung S3C2 series, a microcontroller or microprocessor, one or more memory blocks such as ROM, RAM, EEPROM, or flash memory, timing sources such as oscillators or phase-locked loops, counter-timers, real-time timers, or power-on reset generators, voltage regulators, power management circuits, or DMA controllers. Individual units may further be connected by buses such as AMBA buses.

The evaluation device and/or the data processing device may be connected by or have further external interfaces or ports such as one or more of serial or parallel interfaces or ports, USB, Centronics Port, FireWire, HDMI, Ethernet, Bluetooth, RFID, Wi-Fi, USART, or SPI, or analogue interfaces or ports such as one or more of ADCs or DACs, or standardized interfaces or ports to further devices such as a 2D-camera device using an RGB-interface such as CameraLink. The evaluation device and/or the data processing device may further be connected by one or more of interprocessor interfaces or ports, FPGA-FPGA-interfaces, or serial or parallel interfaces ports. The evaluation device and the data processing device may further be connected to one or more of an optical disc drive, a CD-RW drive, a DVD+RW drive, a flash drive, a memory card, a disk drive, a hard disk drive, a solid state disk or a solid state hard disk.

The evaluation device and/or the data processing device may be connected by or have one or more further external connectors such as one or more of phone connectors, RCA connectors, VGA connectors, hermaphrodite connectors, USB connectors, HDMI connectors, 8P8C connectors, BCN connectors, IEC 60320 C14 connectors, optical fiber connectors, D-subminiature connectors, RF connectors, coaxial connectors, SCART connectors, XLR connectors, and/or may incorporate at least one suitable socket for one or more of these connectors.

Possible embodiments of a single device incorporating one or more of the detectors according to the present invention, the evaluation device or the data processing device, such as incorporating one or more of the optical sensors, optical systems, evaluation device, communication device, data processing device, interfaces, system on a chip, display devices, or further electronic devices, are: mobile phones, personal computers, tablet PCs, or medical devices. Specifically, an embodiment incorporating the detector and/or a part thereof such as the evaluation device and/or the data processing device may be: a mobile phone incorporating a display device, a data processing device, the optical sensors, optionally the sensor optics, and the evaluation device. The detector according to the present invention specifically may be suitable for integration in medical devices.

The detector according to one or more of the above-mentioned embodiments may be modified and improved in various ways, which will be briefly discussed in the following and which may also be implemented in various arbitrary combinations, as the skilled person will recognize. However, in order to design the desired low-cost UV detector, such kinds of modifications or improvements are, preferably, implemented in an economical manner.

The detector may comprise, thus, further at least one transfer device, wherein the "transfer device" is an arbitrary device which is adapted for modifying an incident light beam, such as by modifying one or more of a beam parameter of the incident light beam, a width of the light beam or a direction of the light beam, and/or which is, thus, adapted for guiding the incident light beam onto the at least two fluorescent waveguiding sheets. The transfer device may comprise one or more of: at least one lens, such as at least one converging lens, wherein the lens may be a constant lens or a focus-tunable lens; at least one beam deflection element, preferably at least one refractive element, in particular a mirror; at least one beam splitting element, preferably at least one of a beam splitting cube or a beam splitting mirror; at least one diaphragm, at least one multi-lens system.

Alternative or in addition, the detector may further comprise at least one wavelength selective element, also referred to as at least one optical element. The at least one optical filter, as an example, may comprise at least one of: a transmissive filter or an absorption filter, at least one grating, at least one dichroitic mirror or any combination thereof. Other types of wavelength selective elements may be used. As already described above, the at least one optical sensor comprises at least one of: an optical short-pass filter, an optical long-pass filter or, preferably, an optical band-pass filter.

As already indicated above, at least one property of the ultraviolet radiation as provided by the incident light beam is determined by evaluating the sensor signal. As generally used, the term "property" refers to a physical phenomenon which is closely related to the ultraviolet radiation as carried by the incident light beam. At least one measured value which is related at least one property of the ultraviolet radiation can be obtained by using the evaluation device which receives the sensor signal as generated by each one of the optical sensors in response to the incident fluorescence light. Thus, a process chain of receiving UV radiation by the fluorescent waveguiding sheets, converting the received UV radiation into fluorescence light comprising a component of visible radiation by the fluorescent waveguiding sheets, guiding the fluorescence light towards at least one of the optical sensors, generating at least one sensor signal by the optical sensors and evaluating the at least one sensor signal in the evaluation device allows drawing conclusions to at least one of the properties of the UV radiation. Consequently, the at least one sensor signal as evaluated by the evaluation device is, therefore, related to at least one property of the incident fluorescence light, preferably to an intensity, a wavelength and/or a polarization of the UV radiation. Herein, conclusions with regard to the intensity of the incident light beam may, preferably, be drawn by comparing a measured value of the sensor signal with a reference signal with a known intensity of the UV radiation, wherein, for this purpose, a calibration procedure may be applied. Further, conclusions with respect to the attenuation of the incident light beam by the fluorescent waveguiding sheets can be drawn by comparing the measured values of the sensor signals of a first optical sensor with the measured values of the sensor signals of a second optical sensor, wherein a respective distance of the fluorescent waveguiding sheets which generates and guides the fluorescence light towards the first optical sensor or towards the second optical sensor, respectively, are known, whereby an attenuation of the incident UV radiation with respect to the distance of traveling through the fluorescent waveguiding sheets can be derived. However, other kinds of evaluation procedures which are known to the skilled person may also be feasible, in particular, depending on the properties for which the detector may, specifically, be designed.

In a further embodiment, the at least two of the optical sensors may differ with regard to their respective spectral sensitivity. Herein, the evaluation device may, generally, be adapted for determining at least one property of the incident UV beam as a function of the particular wavelength or a range of wavelengths comprised by the incident UV beam. Since such a dependency is, typically, denoted by the expression "color", however, usually limited to the visible spectral range, the term "color" is, subsequently, used in an analogous manner for the UV spectral range. Thus, the expression "determine a color" generally refers to a step of generating at least one item of spectral information about the incident light beam. The at least one item of spectral information may be selected from at least one wavelength, specifically, a peak wavelength. The determination of the color of the light beam may be performed in various ways which are generally known to the skilled person. Thus, the spectral sensitivities of the optical sensors may span a coordinate system in color space, and the sensor signals provided by the optical sensors may provide a coordinate in this color space, as known to the skilled person. By way of example, the detector may comprise two, three or more optical sensors of the same kind. Thereof, at least two, preferably at least three, of the optical sensors may have differing spectral sensitivities. Further, the evaluation device may be adapted for generating the at least one item of color information for the incident light beam by evaluating the sensor signals of the optical sensors having differing spectral sensitivities. In a similar manner, different polarization states of the incident UV radiation may be determined.

In a further aspect, the present invention discloses a method for measuring ultraviolet radiation by using at least one detector, in particular a detector according to the present invention, such as according to one or more of the embodiments referring to a detector as disclosed above or as disclosed in further detail below. Still, other types of detectors may be used.

The method comprises the following method steps, wherein the method steps may, preferably, be performed in the given order or may be performed in a different order. Further, one or more additional method steps may be present which are not listed. Further, one, more than one or even all of the method steps may be performed repeatedly. The method steps are as follows:
- illuminating at least two fluorescent waveguiding sheets by an incident light beam providing ultraviolet radiation, wherein each one of the fluorescent waveguiding sheets has at least one fluorescent material;
- generating fluorescence light comprising visible radiation in the fluorescent material in response to an illumination of the fluorescent material by the incident light beam;
- guiding the fluorescence light by the fluorescent waveguiding sheet to at least one of two optical sensors, wherein each one of the optical sensors is sensitive to visible radiation;
- detecting the fluorescence light by each one of the optical sensors and generating at least one sensor signal in response to the fluorescence light; and
- determining at least one property of the ultraviolet radiation as provided by the incident light beam by evaluating the sensor signal using at least one evaluation device,
wherein the incident light beam subsequently impinges on each one of the fluorescent sheets, wherein each one of the fluorescent waveguiding sheets is semitransparent with respect to the incident light beam.

For details, options and definitions, concerning the method according to the present invention, reference may be made to the detector as described above or below in further detail.

In a further aspect of the present invention, a use of the detector according to the present invention, such as according to one or more of the embodiments given above or given in further detail below, is proposed, for determining and/or quantifying UV radiation that can be generated by natural and/or artificial sources. Specifically, applications may include areas where risks to an exposure which involves UV radiation may reasonably be expected. In particular, an exposure to UV radiation, be it from natural UV sources and/or from artificial UV sources, are predominantly expected to occur in the areas of personal healthcare, public health, and/or occupational safety. While natural UV sources include the sun, lightning, and other kinds of atmospheric gas discharge, wherein the UV radiation provided by the sun may be of particular relevance for personal healthcare and public health, most kinds of artificial UV sources are often used at industrial sites, in medical centers or in various kinds of laboratories. However, further fields of applications for the detector and method according to the present invention may also be feasible. By way of example, the detector may be used in manufacturing and/or robotics and/or monitoring of production processes, and/or monitoring of UV radiation sources.

The proposed detector and method for measuring UV radiation provide a large number of advantages over known detectors and methods of this kind. The low-cost UV detector as proposed herein and the related method for measuring UV radiation allows using low-cost hardware components, exhibits an improved performance with respect to one or more of: miniaturization, robustness, determination accuracy, high dynamic range, high sensitivity for UV radiation, and cost effectiveness.

Overall, in the context of the present invention, the following embodiments are regarded as preferred:
Embodiment 1: A detector for measuring UV radiation, the detector comprising:
   - at least two fluorescent waveguiding sheets, each one of the fluorescent waveguiding sheets having at least one fluorescent material, wherein the fluorescent material is adapted for generating fluorescence light comprising visible radiation in response to an illumination of the fluorescent material by an incident light beam providing ultraviolet radiation;
   - at least two optical sensors, each one of the optical sensors being sensitive to visible radiation and adapted for detecting the fluorescence light, wherein each one of the optical sensors is adapted for generating at least one sensor signal in response to the fluorescence light; and
   - at least one evaluation device, wherein the evaluation device is configured for determining at least one property of the ultraviolet radiation as provided by the incident light beam by evaluating the sensor signal,
   wherein the at least two fluorescent waveguiding sheets are arranged in a manner that the incident light beam is capable of subsequently impinging on each one of the fluorescent waveguiding sheets, each one of the fluorescent waveguiding sheets being semitransparent with respect to the incident light beam.
Embodiment 2: The detector according to the preceding embodiment, wherein the at least two fluorescent waveguiding sheets are arranged in a stack.
Embodiment 3: The detector according to the preceding embodiment, wherein the stack is essentially perpendicular with respect to an optical axis, wherein the optical axis is defined by a direction of the incident light beam.
Embodiment 4: The detector according to the preceding embodiment, wherein essentially perpendicular refers to a condition of a perpendicular orientation exhibiting a tolerance of ± 20° or less, preferably a tolerance of ± 10° or less, more preferred a tolerance of ± 5° or less.
Embodiment 5: The detector according to any one of the three preceding embodiments, wherein the light beam consecutively passes through the fluorescent waveguiding sheets being arranged within the stack.
Embodiment 6: The detector according to any one of the four preceding embodiments, wherein the at least two fluorescent waveguiding sheets are arranged in an essentially parallel manner within the stack.
Embodiment 7: The detector according to the preceding embodiment, wherein essentially parallel refers to the condition of a parallel orientation, exhibiting a tolerance of ± 20° or less, preferably a tolerance of ± 10° or less, more preferred a tolerance of ± 5° or less.
Embodiment 8: The detector according to any one of the preceding embodiments, wherein the fluorescent waveguiding sheet has a thickness of 10 µm to 3 mm, preferably a thickness of 100 µm to 1 mm, such as a thickness of 50 µm to 2 mm.
Embodiment 9: The detector according to any one of the preceding embodiments, wherein the fluorescent waveguiding sheet is flexible or deformable.
Embodiment 10: The detector according to any one of the preceding embodiments, wherein the fluorescent waveguiding sheet comprises at least one matrix material, wherein the at least one fluorescent material is one or more of mixed into the matrix material, dispersed into the matrix material, chemically bound to the matrix material or dissolved in the matrix material.
Embodiment 11: The detector according to the preceding embodiment, wherein the matrix material comprises at least one plastic material.
Embodiment 12: The detector according to the preceding embodiment, wherein the plastic material comprises at least one polymer material.
Embodiment 13: The detector according to any one of the two preceding embodiments, wherein the plastic material comprises at least one material selected from the group consisting of: a polycarbonate, a poly(methyl methacrylate), a polystyrene, a polyurethane, a polypropylene, a polyethylene terephthalate, a polyvinylchloride.
Embodiment 14: The detector according to any one of the preceding embodiments, wherein the fluorescent material comprises at least one fluorescent dye.
Embodiment 15: The detector according to the preceding embodiment, wherein the fluorescent dye is capable of being saturated by the light beam, such that a total power of the fluorescence light generated by the fluorescent dye is a nonlinear function of an intensity of the light beam.
Embodiment 16: The detector according to any one of the two preceding embodiments, wherein the fluorescent dye comprises at least one organic fluorescent dye.
Embodiment 17: The detector according to any one of the three preceding embodiments, wherein the fluorescent dye is selected from the group consisting of: a xanthene derivative, preferably one or more of fluorescein, rhodamine, oregon green, eosin, texas red, or a derivative of any component thereof; a cyanine derivative, preferably one or more of cyanine, indocarbocyanine, oxacarbocyanine, thiacarbocyanine, merocyanine, or a derivative of any component thereof; a squaraine derivative or a ring-substituted squaraine, preferably one or more of Seta, SeTau, and Square dyes, or a derivative of any component thereof; a naphthalene derivative, preferably one or more of a dansyl or a prodan derivative thereof; a coumarin derivative; a oxadiazole derivative, preferably one or more of pyridyloxazole, nitrobenzoxadiazole, benzoxadiazole, or a derivative of any component thereof; an anthracene derivative, preferably one or more of an anthraquinone, DRAQ5, DRAQ7, CyTRAK orange, or a derivative of any component thereof; a pyrene derivative, preferably cascade blue; an oxazine derivative, preferably one or more of nile red, nile blue, cresyl violet, oxazine 170, or a derivative of any component thereof; an acridine derivative, preferably one or more of proflavin, acridine orange, acridine yellow, or a derivative of any component thereof; an arylmethine derivative, preferably one or more of auramine, crystal violet, malachite green, or a derivative of any component thereof; a tetrapyrrole derivative, preferably one or more of porphin, phthalocyanine, bilirubin; a rylene dye or any derivative thereof, such as a perylene dye; a naphthalene imid or perylene imide; a naphthoilene benzimidazole dye such as published in WO 2012/168395 A1; or a derivative of any component thereof.
Embodiment 18: The detector according to any one of the preceding embodiments, wherein the fluorescent waveguiding sheet is adapted for absorbing 40 % to 60 %, in particular approximately 50 %, of the incident light beam.
Embodiment 19: The detector according to any one of the preceding embodiments, wherein the fluorescent waveguiding sheet is adapted for guiding the fluorescence light towards at least one of the optical sensors.
Embodiment 20: The detector according to the preceding embodiment, wherein the fluorescent waveguiding sheet is adapted for guiding the fluorescence light towards exactly one of the optical sensors.
Embodiment 21: The detector according to the preceding embodiment, wherein the optical sensors which are adapted for receiving the fluorescence light from adjacent fluorescent waveguiding sheets are spaced in a separate manner with respect to each other.
Embodiment 21: The detector according to any one of the two preceding embodiments, wherein the optical sensors which are adapted for receiving the fluorescence light from adjacent fluorescent waveguiding sheets are placed on opposite sides of the stack of the fluorescent waveguiding sheets.
Embodiment 23: The detector according to any one of the preceding embodiments, wherein the fluorescent waveguiding sheet is adapted for guiding the fluorescence light towards at least one edge of the fluorescent waveguiding sheet.
Embodiment 24: The detector according to the preceding embodiment, wherein the edge refers to a boundary of the at least one fluorescent waveguiding sheet.
Embodiment 25: The detector according to any one of the preceding embodiments, wherein the detector is adapted for guiding the fluorescence light from at least one of the edges towards at least one of the optical sensors.
Embodiment 26: The detector according to the preceding embodiment, wherein at least one of the optical sensors is located adjacently to at least one of the edges.
Embodiment 27: The detector according to any one of the two preceding embodiments, wherein the detector further comprises at least one waveguide being located between at least one of the fluorescent waveguiding sheets and at least one of the optical sensors, wherein the waveguide is adapted for guiding the fluorescence light from at least one of the edges of the fluorescent waveguiding sheet towards at least one of the optical sensors.
Embodiment 28: The detector according to any one of the preceding embodiments, wherein an orientation of the fluorescent waveguiding sheet is essentially perpendicular to an optical axis as being defined by a direction of the incident light beam.
Embodiment 29: The detector according to any one of the preceding embodiments, wherein the optical sensor comprises a sensor region, wherein the sensor region is sensitive to the fluorescent light.
Embodiment 30: The detector according to the preceding embodiment, wherein the sensor region is a homogeneous sensitive area.
Embodiment 31: The detector according to any one of the two preceding embodiments, wherein the sensor region has a surface of at least 1 mm², preferably of at least 10 mm², more preferably of at least 100 mm², more preferably of at least 400 mm².
Embodiment 32: The detector according to any one of the three preceding embodiments, wherein the sensor region of the optical sensor is oriented essentially perpendicular to the orientation of the fluorescent waveguiding sheet.
Embodiment 33: The detector according to any one of the preceding embodiments, wherein the optical sensor comprises at least one photodiode, preferably at least one inorganic photodiode.
Embodiment 34: The detector according to the preceding embodiment, wherein the optical sensor comprises one of: a GaP based photodiode, a SiC based photodiode, a GaN based photodiode, a TiO₂-based photodiode, or a Si based photodiode.
Embodiment 35: The detector according to any one of the preceding embodiments, further comprising at least one optical filter element.
Embodiment 36: The detector according to the preceding embodiment, wherein the optical filter element is selected from at least one of an optical short-pass filter, an optical long-pass filter and an optical band-pass filter.
Embodiment 37: The detector according to any one of the two preceding embodiments, wherein the optical filter element is placed within the beam path of the incident light beam.
Embodiment 38: The detector according to any one of the three preceding embodiments, wherein the optical filter element is capable of filtering out radiation outside the ultraviolet spectral range or a partition thereof.
Embodiment 39: The detector according to any one of the preceding embodiments, wherein the detector further comprises at least one transfer device, the transfer device being adapted for guiding the light beam onto the fluorescent waveguiding sheet.
Embodiment 40: The detector according to the preceding embodiment, wherein the transfer device comprises one or more of: at least one lens, preferably selected from at least one of a constant lens focus-tunable lens; at least one beam deflection element, preferably at least one mirror; at least one beam splitting element, preferably at least one of a beam splitting cube or a beam splitting mirror; at least one multi-lens system.
Embodiment 41: The detector according to any one of the preceding embodiments, wherein the at least one property of the ultraviolet radiation as determined by the evaluation device is selected from at least one of an intensity of the incident light beam, an attenuation of the incident light beam by the fluorescent waveguiding sheets, a polarization state of the incident light beam.
Embodiment 42: The detector according to any one of the preceding embodiments, wherein at least two of the fluorescent waveguiding sheets differ in their response to the illumination of the fluorescent material by the ultraviolet radiation.
Embodiment 43: The detector according to any one of the preceding embodiments, wherein at least two of the fluorescent waveguiding sheets differ in their response to at least one of an intensity, a wavelength, a polarization of the ultraviolet radiation.
Embodiment 44: The detector according to any one of the preceding embodiments, wherein at least two of the optical sensors differ in their response to at least one of an intensity, a wavelength, a polarization of the ultraviolet radiation.
Embodiment 45: A method for measuring UV radiation by using at least one detector, specifically the detector according to any one of the preceding embodiments, the method comprising the following steps:
   - illuminating at least two fluorescent waveguiding sheets by an incident light beam providing ultraviolet radiation, wherein each one of the fluorescent waveguiding sheets has at least one fluorescent material;
   - generating fluorescence light comprising visible radiation in the fluorescent material in response to an illumination of the fluorescent material by the incident light beam;
   - guiding the fluorescence light by the fluorescent waveguiding sheet to at least one of two optical sensors, wherein each one of the optical sensors is sensitive to visible radiation;
   - detecting the fluorescence light by each one of the optical sensors and generating at least one sensor signal in response to the fluorescence light; and
   - determining at least one property of the ultraviolet radiation as provided by the incident light beam by evaluating the sensor signal using at least one evaluation device,
   wherein the incident light beam subsequently impinges on each one of the fluorescent sheets, wherein each one of the fluorescent waveguiding sheets is semitransparent with respect to the incident light beam.
Embodiment 46: A use of the detector according to any one of the preceding embodiments relating to a detector, for a purpose of use in at least one of personal healthcare, public health, occupational safety.

### Brief description of the figures

Further optional details and features of the invention are evident from the description of preferred exemplary embodiments which follows in conjunction with the dependent claims. In this context, the particular features may be implemented alone or with several in combination. The invention is not restricted to the exemplary embodiments. The exemplary embodiments are shown schematically in the figures. Identical reference numerals in the individual figures refer to identical elements or elements with identical function, or elements which correspond to one another with regard to their functions.

Specifically, in the figures:

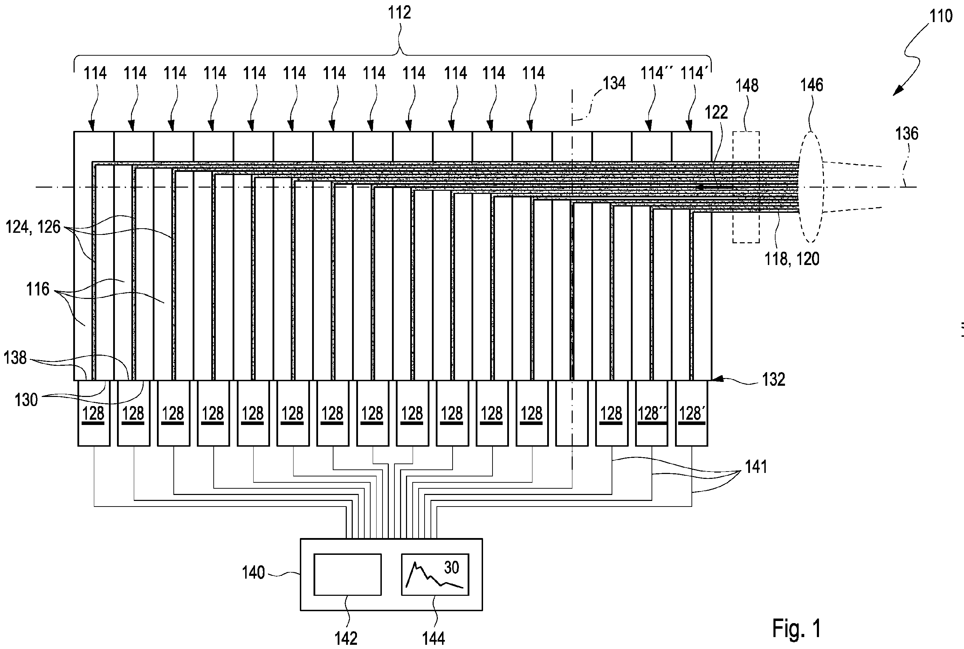

- Figure 1: illustrates a preferred embodiment of an optical detector according to the present invention in a schematic view.

### Exemplary embodiments

Figure 1 illustrates, in a highly schematic fashion, an exemplary embodiment of an optical detector 110 for measuring ultraviolet radiation according to the present invention, hereinafter also be denoted as "UV detector" 110. The UV detector 110 comprises a stack 112 of fluorescent waveguiding sheets 114, wherein the stack 112 as exemplarily depicted in Figure 1 has a number of 16 fluorescent waveguiding sheets 114. However, a different number of 2 to 15 or above 16 fluorescent waveguiding sheets 114 within the stack 112 may also be feasible, in particular, depending on potential needs of a user. Herein, on one hand, a desire for a simple setup of the UV detector 110 would, preferably, result in a lower number of fluorescent waveguiding sheets 114 while, on the other hand, desiring an enhanced sensitivity and/or resolution of the UV detector 110 would, preferably, result in a higher number of fluorescent waveguiding sheets 114. By way of example, the fluorescent waveguiding sheet 114 may have a lateral extension of at least 1 mm², such as at least 100 mm², more preferably of at least 400 mm². As an example, a 0,5mm x 2 mm rectangular sheet, a 2 mm x 20 mm rectangular sheet, a 5 mm x 50 mm rectangular sheet or another dimension may be used. It shall be noted, however, that non-rectangular geometries may also be used for fluorescent waveguiding sheets 114, such as conical or irregular geometries.

Irrespective of the number of the fluorescent waveguiding sheets 114 which may be comprised by the UV detector 110, each one of the fluorescent waveguiding sheets 114 has at least one fluorescent material 116. The fluorescent waveguiding sheet 114, as an example, may comprise a matrix material and the at least one fluorescent material 116 as disposed therein, such as at least one fluorophore, e.g. a fluorescent dye. For exemplary embodiments, reference may be made to the above-mentioned materials, such as one or more of the materials as listed in WO 2012/168395 A1.

For the purposes of the present invention, the fluorescent material 116 as comprised by each one of the fluorescent waveguiding sheets 114 is illuminated by an incident light beam 118, wherein the incident light beam 118 comprises ultraviolet radiation 120 having a wavelength within the UV spectral range from 1 nm to 400 nm, preferably of 200 nm to 400 nm, covering the near and middle ultraviolet as well as UVA and UVB. Since the fluorescent waveguiding sheets 114 are arranged in the stack 112, the incident light beam 118 subsequently impinges within a beam path each one of the fluorescent waveguiding sheets 114 in a consecutive manner along a direction 122.

In order to allow the incident light beam 118 impinging a further one of the fluorescent waveguiding sheets 114, each one of the fluorescent waveguiding sheets 114 is semitransparent and, therefore, capable of absorbing a partition of less than 100 %, preferably of 40 % to 60 %, in particular approximately 50 %, of the incident UV radiation 120 which impinges on a particular fluorescent waveguiding sheet 114'. Herein, each one of the fluorescent waveguiding sheets 114, thus, attenuates the UV radiation 120 by a portion p, such as a percentage, which may, primarily, be provided by an intrinsic property the fluorescent material 116 comprised by the fluorescent waveguiding sheet 114 itself and/or by a concentration of the fluorescent material 116 in the matrix material. A further portion 1-p, such as a further percentage, of the incident UV radiation 120 can, therefore, pass the particular fluorescent waveguiding sheet 114' being ready to impinge on an adjacent fluorescent waveguiding sheet 114", wherein the adjacent fluorescent waveguiding sheet 114" adjoins the particular fluorescent waveguiding sheet 114' within the stack further down along the beam path.

As a result, apart from the particular fluorescent waveguiding sheet 114' which is located in a manner that it is initially impinged by the incident light beam 118, each one of the other fluorescent waveguiding sheets 114, thus, only receives a portion of the incident UV radiation 120. By way of example, assuming that the portion *p* of the attenuation of the UV radiation 120 by each one of the fluorescent waveguiding sheets 114 may be equal, the *n*-th fluorescent waveguiding sheet 114, which is impinged by the UV radiation 120 after the *n*-1 preceding fluorescent waveguiding sheets 114 have already been impinged by the UV radiation 120 before, only receives a portion of *(1-p)ⁿ* of the incident UV radiation 120 impinging on the particular fluorescent waveguiding sheet 114' initially being impinged by the incident light beam 118. However, any one or each one of fluorescent waveguiding sheets 114 may exhibit an individual value for the portion *p*, such as the percentage, of the attenuation of the UV radiation 120, such as by comprising an individual fluorescent material 116.

In response to the illumination 118 of each one of the fluorescent waveguiding sheets 114 by the incident light beam 118, the fluorescent material 116 uses the attenuated portion *p* of the incident ultraviolet radiation 120 having a wavelength within the UV spectral range as indicated above in order to generate fluorescence light 124, wherein the fluorescence light 124 at least comprises a component of visible radiation 126, wherein the visible radiation 126 has a wavelength within the visible spectral range from 400 nm to 800 nm.

As further illustrated in Figure 1, each one of the fluorescent waveguiding sheets 114 is capable of guiding the fluorescence light 124 at least comprising a component of visible radiation 126 towards at least one of the optical sensors 128. For the purposes of the present invention, each one of the optical sensors 128 is adapted for detecting the fluorescence light 124 by being sensitive within at least a partition of the visible spectral range. As a result, in response to the incident fluorescence light 124, each one of the optical sensors 128 generates at least one sensor signal which is, therefore, related to at least one property of the incident fluorescence light 124, preferably to an intensity, a wavelength and/or a polarization of the incident fluorescence light 124.

In the particularly preferred embodiment as depicted in Figure 1, each one of the fluorescent waveguiding sheets 114 is capable of guiding the fluorescence light 124 towards exactly one of the optical sensors 128. As a result, a particular optical sensor 128' may be capable of generating a sensor signal which is, therefore, related to at least one property of the incident fluorescence light 124 as generated by particular fluorescent waveguiding sheet 114'. In this embodiment, the number of optical sensors 128 is, therefore, identical with the number of fluorescent waveguiding sheets 114 as comprised by the UV detector 110. However, other embodiments (not depicted here) in which the UV detector 110 comprises a number of optical sensors 128 which differs from the number of fluorescent waveguiding sheets 114, may also be feasible as long as the UV detector 110 comprises at least two individual optical sensors 128. By way of example, two individual optical sensors 128 may be used for simultaneously recording the fluorescence light 124 generated by a single particular fluorescent waveguiding sheet 114', or the fluorescence light 124 generated by a single particular fluorescent waveguiding sheet 114' may be distributed in various manners to two individual optical sensors 128. Still, other embodiments may be conceivable.

As further illustrated in Figure 1, each one of the fluorescent waveguiding sheets 114 is capable of firstly guiding the fluorescence light 124 to an edge 130 of the respective fluorescent waveguiding sheet 114 from where it is, subsequently, guided towards at least one of the optical sensors 128. In a preferred embodiment, as schematically depicted in Figure 1, at least one of the optical sensors 128 can, thus, be located adjacently to the respective edge 130 in order to be capable of receiving the incident fluorescence light 124. In a further embodiment (not illustrated here) a gap may be provided at a position 132 between the at least one of the optical sensors 128 and the respective edge 130 of the adjacent fluorescent waveguiding sheet 114. In a further embodiment (not illustrated here), at least one additional waveguide may be provided, wherein the additional waveguide may be located between at least one of the fluorescent waveguiding sheets 114 and at least one of the optical sensors 128. In this further embodiment, the additional waveguide may be capable of guiding the fluorescence light 124 from the at least one edges 130 of the fluorescent waveguiding sheet 114 towards at least one of the optical sensors 128. Alternatively or in addition, further embodiments may be possible.

As schematically depicted in Figure 1, each of the fluorescent waveguiding sheets 114 may be oriented in a parallel manner with respect to each other and may, hereby, assume an orientation 134 which can be essentially perpendicular (as defined above) with respect to an optical axis 136 which is defined by the direction 122 of the beam path of the incident light beam 118 carrying the UV radiation 120. In this particularly preferred embodiment, a sensor region 138 of each of the optical sensors 128 may be oriented essentially perpendicular to the orientation 134 of the fluorescent waveguiding sheet 114. As a result, the sensor region 138 of each of the optical sensors 128 may be oriented in a manner that the incident fluorescence light 124 may be well-distributed over the sensor region 138, thus, providing a high input signal into the optical sensor 128, in general, being favorable for a signal-to-noise ratio.

Each one of the optical sensors 128 may comprise at least one photosensitive element, in particular a photodiode. Preferably, one or more photodiodes may be used, such as commercially available photodiodes, e.g. inorganic semiconductor photodiodes. By way of example, the optical sensor may comprise one of: a GaP based photodiode, a SiC based photodiode, a GaN based photodiode, a TiO2-based photodiode, or a Si based photodiode, such as the photodiodes as referred to above in more detail. In general, however, other types of photosensitive elements may be used. By way of example, the photosensitive element may be or may comprise a strip-shaped photodiode covering, preferably, the full length of the sensor region 138 of the optical sensors 128 or, preferably, covering at least 50% or, more preferred, at least 70% of the length of the sensor region 138. Other embodiments, however, are feasible, such as embodiments in which more than one photosensitive element may be located within the sensor region 138 of one or more optical sensors 128. By way of example, a plurality of photosensitive elements may be located within the sensor region 138, the plurality, in total, preferably covering the full sensor region 138. As a further example, a matrix of photosensitive elements may be located within the sensor region 138, such as an image sensor or image chip, such as a one-dimensional or two-dimensional CCD or CMOS chip.

Further, the UV detector 110 comprises at least one evaluation device 140 which is being configured to determine at least one property of the ultraviolet radiation 120 as provided by the incident light beam 118 by evaluating the sensor signal. For this purpose, as indicated above, each of the optical sensors 128 generate at least one sensor signal, in response to the incident fluorescence light 124 which may be detected by the respective optical sensor 128. As schematically depicted in Figure 1, each one of the optical sensors 128 may be connected to the evaluation device 140 by a lead 141. However, a further kind of connection between each one of the optical sensors 128 and the evaluation device 140 may also be feasible, such as a wireless connection. Further, the evaluation device 140 can, preferably, comprise at least one processor 142 which may be adapted for performing calculations when determining the at least one property of the incident UV radiation 120 from the sensor signals. In addition or alternatively, the evaluation device 140 can, preferably, comprise at least one display 144 which may be being adapted for presenting results which may be derived by the evaluation device 140 from the sensor signals or provided by any other device, such as a temperature sensor. In particular, the display 144 may be capable of presenting at least one value and/or at least one function or curve being related to the at least one property of the incident UV radiation 120 or, by way of example, to a temperature. Other kinds of arrangements of the evaluation device 140 may also be conceivable.

As described above in more detail, the evaluation device 140 may be adapted to generate the desired information on the at least one property of the incident UV radiation, such as an intensity, attenuation and/or polarization state of the incident UV radiation 120. Herein, conclusions with regard to the intensity of the incident light beam 118 may, preferably, be drawn by comparing a measured value of the sensor signal with a reference signal having a known intensity UV radiation. For this purpose, a calibration procedure may be applied. Further, conclusions with respect to the attenuation of the incident light beam 118 by the fluorescent waveguiding sheets 114 can be drawn by comparing the measured values of the sensor signals of a particular fluorescent waveguiding sheet 1 14' with the measured values of the sensor signals of a further fluorescent waveguiding sheet 114" which may or which may not adjoin the particular fluorescent waveguiding sheet 114'. Herein, respective distances of these fluorescent waveguiding sheets 114', 114" which generate and guide the fluorescence light 124 towards the corresponding optical sensors 128', 128", respectively, are known. As a result, an attenuation of the incident UV radiation which depends on the distance of propagating through the fluorescent waveguiding sheets 114', 114" can be derived in this manner. Alternatively or in addition, the at least two of the optical sensors 128', 128" may differ with regard to their respective spectral sensitivity, which allows differentiating their respective sensor signals with regard to their wavelength. In a similar manner, different polarization states of the incident UV radiation may be determined. However, other kinds of evaluation procedures may also be feasible, in particular, depending on the properties for which the detector 110 may, specifically, be designed.

In addition, the UV detector 110 may, further, comprise additional elements, in particular additional optical elements, preferably one or more optical filter elements and/or one or more transfer devices, such as one or more lenses. In the exemplary embodiment of the UV detector 110 as schematically depicted in Figure 1, an optional converging lens 146 and an optional optical filter element 148 have been placed in a location in front of the particular fluorescent waveguiding sheet 114' which is initially impinged by the incident UV radiation 120. By using the converging lens 146 the incident light beam 118 may be formed in a manner in order to be ready to impinge the stack 112 of the fluorescent waveguiding sheets 114 in form of a parallel beam. Alternatively or in addition, the incident light beam 118 may, as further depicted there, subsequently be filtered by the optical filter element 148, in particular, for removing selected portions of the incident light beam 118, such as portions having a wavelength outside the UV spectral range or a particular partition thereof. By way of example, the optical filter element 146 may, specifically, comprise an optical short-pass filter, an optical long-pass filter or, preferably, an optical band-pass filter. By way of example, the optical band-pass filter may have a wavelength band that can be designed for incident radiation to pass within a wavelength range of 1 nm to 400 nm, such as in the range of 300 nm to 400 nm covering the near ultraviolet, of 300 nm to 400 nm covering the UVA and/or of 280 nm to 315 nm covering the UVB. Other kinds of optical filter elements may also be feasible. Alternatively or in addition, other additional elements and further locations of such additional elements or of the filter elements and/or the transfer devices may also be feasible.

### List of reference numbers

- 110: (ultraviolet) detector
- 12: stack
- 114: fluorescent waveguiding sheet
- 116: fluorescent material
- 118: light beam
- 120: ultraviolet radiation
- 122: direction
- 124: fluorescence light
- 126: visible radiation
- 128: optical sensor
- 130: edge
- 132: position
- 134: orientation
- 136: optical axis
- 138: sensor region
- 140: evaluation device
- 141: lead
- 142: processor
- 144: display
- 146: converging lens
- 148: optical filter element

## Claims

1. A detector (110) for measuring ultraviolet radiation (120), the detector (110) comprising:
- at least two fluorescent waveguiding sheets (114), each one of the fluorescent waveguiding sheets (114) having at least one fluorescent material (116), wherein the fluorescent material (116) is adapted for generating fluorescence light (124) comprising visible radiation (126) in response to an illumination of the fluorescent material (116) by an incident light beam (118) providing ultraviolet radiation (120);
- at least two optical sensors (128), each one of the optical sensors (128) being sensitive to visible radiation (126) and adapted for detecting the fluorescence light (124), wherein each one of the optical sensors (128) is adapted for generating at least one sensor signal in response to the fluorescence light (124); and
- at least one evaluation device (140), wherein the evaluation device (140) is configured for determining at least one property of the ultraviolet radiation (120) as provided by the incident light beam (118) by evaluating the sensor signal,
wherein the at least two fluorescent waveguiding sheets (114) are arranged in a manner that the incident light beam (118) is capable of subsequently impinging on each one of the fluorescent waveguiding sheets (114), each one of the fluorescent waveguiding sheets (114) being semitransparent with respect to the incident light beam (118).

2. The detector (110) according to the preceding claim, wherein the at least two fluorescent waveguiding sheets (114) are arranged in a stack (112).

3. The detector (110) according to any one of the preceding claims, wherein the fluorescent waveguiding sheet (114) is adapted for guiding the fluorescence light (124) towards at least one of the optical sensors (128).

4. The detector (110) according to the preceding claim, wherein the fluorescent waveguiding sheet (114) is adapted for guiding the fluorescence light (124) towards exactly one of the optical sensors (128).

5. The detector (110) according to any one of the preceding claims, wherein the fluorescent waveguiding sheet (114) is adapted for guiding the fluorescence light (124) towards at least one edge (130) of the fluorescent waveguiding sheet (114).

6. The detector (110) according to the preceding claim, wherein the detector (110) is adapted for guiding the fluorescence light (124) from at least one of the edges (130) towards at least one of the optical sensors (128).

7. The detector (110) according to the preceding claim, wherein at least one of the optical sensors (128) is located adjacently to at least one of the edges (130), or wherein the detector (110) further comprises at least one waveguide being located between at least one of the fluorescent waveguiding sheets (114) and at least one of the optical sensors (128), wherein the waveguide is adapted for guiding the fluorescence light (124) from at least one of the edges (130) of the fluorescent waveguiding sheet (114) towards at least one of the optical sensors (128).

8. The detector (110) according to any one of the preceding claims, wherein an orientation (134) of the fluorescent waveguiding sheet (114) is essentially perpendicular to an optical axis (136) as being defined by a direction (122) of the incident light beam.

9. The detector (110) according to the preceding claim, wherein a sensor region (138) of the optical sensor (128) is oriented essentially perpendicular to the orientation (134) of the fluorescent waveguiding sheet (114).

10. The detector (110) according to any one of the preceding claims, wherein the fluorescent waveguiding sheet (114) is adapted for absorbing 40 % to 60 %, in particular approximately 50 %, of the incident light beam (118).

11. The detector (110) according to any one of the preceding claims, wherein the at least one property of the ultraviolet radiation (120) as determined by the evaluation device (140) is selected from at least one of an intensity of the incident light beam (118), an attenuation of the incident light beam (118) by the fluorescent waveguiding sheets (114), a polarization state of the incident light beam (118).

12. The detector (110) according to any one of the preceding claims, wherein at least two of the fluorescent waveguiding sheets (114) differ in their response to the illumination of the fluorescent material (116) by the ultraviolet radiation (120).

13. The detector (110) according to any one of the preceding claims, wherein at least two of the fluorescent waveguiding sheets (114) differ in their response to at least one of an intensity, a wavelength, a polarization of the ultraviolet radiation (120).

14. A method for measuring ultraviolet radiation (120) by using at least one detector (110), the method comprising the following steps:
- illuminating at least two fluorescent waveguiding sheets (114) by an incident light beam (118) providing ultraviolet radiation (120), wherein each one of the fluorescent waveguiding sheets (114) has at least one fluorescent material (116);
- generating fluorescence light (124) comprising visible radiation (126) in the fluorescent material (116) in response to an illumination of the fluorescent material (116) by the incident light beam (118);
- guiding the fluorescence light (124) by the fluorescent waveguiding sheet (114) to at least one of two optical sensors (128), wherein each one of the optical sensors (128) is sensitive to visible radiation (126);
- detecting the fluorescence light (124) by each one of the optical sensors (128) and generating at least one sensor signal in response to the fluorescence light (124); and
- determining at least one property of the ultraviolet radiation (120) as provided by the incident light beam (118) by evaluating the sensor signal using at least one evaluation device (140),
wherein the incident light beam (118) subsequently impinges on each one of the fluorescent sheets (114), wherein each one of the fluorescent waveguiding (114) sheets is semitransparent with respect to the incident light beam (118).

15. A use of the detector (110) according to any one of the preceding claims relating to a detector (110), for a purpose of use in at least one of personal healthcare, public health, occupational safety.
